Europäisches Patentamt

European Patent Office

Office européen des brevets

(11) Veröffentlichungsnummer: **0 330 038 B1**

(12) **EUROPÄISCHE PATENTSCHRIFT**

(45) Veröffentlichungstag der Patentschrift: **06.10.93**

(21) Anmeldenummer: **89102426.7**

(22) Anmeldetag: **13.02.89**

(51) Int. Cl.⁵: **C08F 212/12**, C08L 25/16,
//(C08F212/12,220:44,220:56)

(54) **Wärmeformbeständige thermoplastische Formmassen.**

(30) Priorität: **26.02.88 DE 3806074**

(43) Veröffentlichungstag der Anmeldung:
**30.08.89 Patentblatt 89/35**

(45) Bekanntmachung des Hinweises auf die
Patenterteilung:
**06.10.93 Patentblatt 93/40**

(84) Benannte Vertragsstaaten:
**DE ES FR GB IT**

(56) Entgegenhaltungen:
**EP-A- 0 042 572**
**EP-A- 0 164 874**

**DATABASE CHEMICAL ABSTRACTS,**
**(HOST:STN), 1989, Band 112, Nr. 12, Zusam-**
**menfassung Nr. 99994t, Columbus, Ohio, US;**
**& JP-A-01 141 941 (KANEGAFUCHI CHEMI-**
**CAL INDUSTRY CO.) 02-06-1989**

(73) Patentinhaber: **BAYER AG**

**D-51368 Leverkusen(DE)**

(72) Erfinder: **Jansen, Ulrich, Dr.**
**Stürzelberger Strasse 50**
**D-4047 Dormagen 5(DE)**
Erfinder: **Ott, Karl-Heinz, Dr.**
**Paul-Klee-Strasse 54**
**D-5090 Leverkusen 1(DE)**
Erfinder: **Sümmermann, Klaus, Dr.**
**Von-Steinen-Strasse 1**
**D-5758 Fröndgenberg-Frömern(DE)**
Erfinder: **Frohberg, Ekkehard, Dr.**
**Offenbachstrasse 33**
**D-5000 Köln 71(DE)**

**Beschreibung**

Die Erfindung betrifft ein α-Methylstyrol/Acrylnitril/Acrylamid-Terpolymerisat sowie dessen Mischung mit ABS-Pfropfkautschuken. Diese Terpolymerisate können durch Emulsionspolymerisation hergestellt werden.

Die durch Emulsionspolymerisation hergestellten Latices der erfindungsgemäßen Terpolymerisate weisen eine ausgezeichnete Rührstabilität auf.

Wärmeformbeständige α-Methylstyrol/Acrylnitril (AMS/ACN)-Copolymerisate enthaltende ABS-Formmassen sind bekannt (vgl. US-PS 3 010 936, DE-A-3 128 370, DE-A-3 431 194, US-A-3 111 501).

Es zeigt sich jedoch, daß diese Formmassen nur mäßige Eigenschaften aufweisen; insbesondere ist die erzielbare Wärmeformbeständigkeit und Verarbeitungsbreite für viele Anwendungen nicht ausreichend.

In EP-A 42 572 wurde vorgeschlagen, den Anteil des α-Methylstyrols im Polymerisat so groß wie nur möglich zu machen. Dies führt zu einer Verbesserung der Wärmeformbeständigkeit; jedoch ist die Thermostabilität bei hohen Temperaturen d.h. bei der Verarbeitung reduziert.

Der US-PS 4 659 790 ist zu entnehmen, daß die Thermostabilität und Wärmeformbeständigkeit von α-Methylstyrol/Acrylnitril-Copolymerisaten verbessert werden kann, wenn die Copolymerisate eine bestimmte α-Methylstyrol-Sequenzlängen-Verteilung aufweisen; insbesondere soll der Anteil an α-Methylstyrol-Triaden nicht über 15 Gew.-% des Polymerisats ausmachen.

Bestimmte Copolymerisate aus α-Methylstyrol (AMS), Acrylnitril (ACN) mit Methacrylamid (MAA) sind durch Lösungspolymerisation hergestellt worden (Chem. pap. 41 (1), 119-124 (1987)). Eine technische Herstellung ist auf diesem Weg allerdings nicht möglich.

Die bekannten Verfahren zur Herstellung von α-Methylstyrol-Polymerlatices liefern jedoch nur Latices mit einer geringen Stabilität gegen Scherung, so daß ihre wirtschaftliche Herstellung und Handhabung schwierig ist.

Die Erfindung betrifft ein wärmeformbeständiges und thermostabiles α-Methylstyrol/Acrylnitril/Acrylamid-Terpolymerisat mit verbesserter Polymerlatexstabilität, ohne höhere Anteile an Polymerisationshilfsstoffen, (die sich in der Regel nachteilig auf die Qualität der Formmassen auswirken).

Es wurde gefunden, daß thermoplastische Formmassen, basierend auf einem Terpolymerisat aus α-Methylstyrol, Acrylnitril und Acrylamid eine hohe Wärmeformbeständigkeit und gute Thermostabilität bei hohen Verarbeitungstemperaturen aufweisen. Bei der Herstellung dieser Terpolymerisate durch Emulsionspolymerisation werden Polymerisatlatices gebildet, die gegenüber herkömmlichen α-Methylstyrol und Acrylnitril einpolymerisiert enthaltenden Co- oder Terpolymerisatlatices deutlich verbesserte Stabilität gegen mechanische Scherung aufweisen.

Dies ist besonders vorteilhaft, weil hochwärmeformbeständige AMS-Polymerisat-Latices hergestellt werden können, die einen deutlich höheren Polymerisatgehalt aufweisen und damit auch eine wirtschaftlichere Herstellung des Copolymerisats durch Verbesserung der Raum/Zeit-Ausbeute möglich wird.

Man kann auch erfindungsgemäß, stabile AMS-Copolymerisate mit deutlich geringeren Mengen an Polymerisationshilfsstoffen z.B. (Emulgator) herstellen, ohne daß ihre Stabilität zu gering wird.

Gegenstand der Erfindung ist eine thermoplastische Formmasse mit erhöhter Wärmeformbeständigkeit, enthaltend

A. 10-100 Gew.-%, bevorzugt 60-90 Gew.-% eines durch Emulsionspolymerisation hergestellten Polymerisats, aus

A.1 50-85 Gew.-Teilen, bevorzugt 62-85 Gew.-Teilen, besonders bevorzugt 69-85 Gew.-Teilen α-Methylstyrol;

A.2 10-50 Gew.-Teilen, bevorzugt 14-37 Gew.-Teilen, besonders bevorzugt 14-30 Gew.-Teilen Acrylnitril und/oder Methacrylnitril
und

A.3 1-50 Gew.-Teilen, bevorzugt 1-20 Gew.-Teilen, besonders bevorzugt 1 bis 10 Gew.-Teilen Acrylamid

B. 0-90 Gew.-%, bevorzugt 10-40 Gew.-% eines Pfropfpolymerisats von α-Methylstyrol und/oder Styrol und Acrylnitril oder von Methylmethacrylat sowie gegebenenfalls weiterer copolymerisierbaren Monomeren auf einen Kautschuk mit einer Glastemperatur kleiner 0 °C (ABS-Pfropfpolymerisat).

Darüber hinaus können übliche Additive in Mengen bis 15 Gew.-%, bezogen auf die thermoplastische Formmasse enthalten sein.

Die Komponente A der erfindungsgemäßen thermoplastischen Formmassen besteht aus einem Polymerisat, erhalten durch Copolymerisation von A.1 50-85 Gew.-Teilen, bevorzugt 62-85 Gew.-Teilen besonders bevorzugt 69-85 Gew.-Teilen, α-Methylstyrol; A.2 10-50 Gew.-Teilen bevorzugt 14-37 Gew.-Teilen, besonders bevorzugt 14-30 Gew.-Teilen, Acrylnitril; A.3 1-50 Gew.-Teilen, bevorzugt 1-20 Gew.-Teilen, besonders bevorzugt 1-10 Gew.-Teilen, Acrylamid.

Die Komponente A kann durch an sich bekannte Emulsionspolymerisation hergestellt werden. Dabei ist das Zulauf-und das Batch-Zulauf-Verfahren bei Temperaturen von 50-90°C bevorzugt.

Als Emulgatoren können bekannte, vorzugsweise anionische Tenside eingesetzt werden; z.B. Na- oder K-Salze der disproportionierten Abietinsäure oder höherer Fettsäuren und Alkalisalze von Alkyl-, und Alkylarylsulfonsäuren sowie Alkylarylcarbonsäuren. Auch organische Sulfate sind geeignet. Auch nicht-ionische Emulgatoren, z.B. Polyethylenoxidalkylether oder Kombinationen mehrerer Emulgatoren können verwendet werden.

Als Initiatoren können wasserlösliche organische Peroxide, Azoverbindungen, Alkalipersulfate und -perphosphate eingesetzt werden; bei Polymerisationstemperaturen unter 60°C sind Redoxsysteme auf Basis organischer Peroxide und wasserlöslicher Reduktionsmittel besonders geeignet. Beispiele für Initiatoren sind Kalium- und Ammoniumperoxidsulfat und als Redoxsysteme Cumolhydroperoxid/$Fe^{++}$/Rongalit; p-Methanhydroperoxid/$Fe^{++}$/Rongalit; Diisopropylbenzolhydroperoxid/$Fe^{++}$/Ascorbinsäure.

Als Regler zur Einstellung der Molekulargewichte der Polymerisate kann man organische Schwefelverbindungen, wie Mercaptane und Disulfide verwenden, wobei langkettige Mercaptane, z.B. n- und tert.-Dodecylmercaptan bevorzugt sind. Die Regler werden zweckmäßig im Monomergemisch gelöst.

Emulgatoren, Initiatoren und Regler können auch in der wäßrigen Flotte vorgelegt oder separat während der Polymerisation kontinuierlich oder diskontinuierlich zugegeben werden.

Nach beendeter Polymerisation wird der erhaltene Copolymerisatlatex, gegebenenfalls nach Mischen mit weiteren Polymerisat-Latices und/oder nach Zusatz von Zuschlagstoffen auf bekannte Weise koaguliert (z.B. durch Zusatz von Mineralsäure und/oder Salz) und gewaschen. Das Copolymerisat kann im Vakuum bei 110-150°C zum Pulver getrocknet werden oder vorzugsweise durch Entgasung der Polymerschmelze auf einem Extruder getrocknet werden.

Um Formmassen mit sehr guter Wärmeformbeständigkeit zu erhalten, ist es erforderlich, den Anteil an flüchtigen Bestandteilen (Wasser, Restmonomeren) auf weniger als 4000 ppm, vorzugsweise auf weniger als 2000 ppm, zu reduzieren.

Die Komponente B der erfindungsgemäßen thermoplastischen Formmasse besteht aus einem ABS-Pfropfpolymerisat, hergestellt durch Polymerisation eines Gemisches aus Styrol und/oder α-Methylstyrol einerseits und Acrylnitril andererseits sowie gegebenenfalls weiterer copolymerisierbarer Monomerer oder durch Polymerisation von Methylmethacrylat und gegebenenfalls weiterer Monomerer in Gegenwart eines gegebenenfalls teilvernetzten Kautschuks mit einer Glastemperatur kleiner 0°C.

Als teilvernetzte Kautschuke kommen in Betracht: Polybutadien, EPDM-Kautschuk (d.h. Ethylen-Propylen-Dien-Monomer-Kautschuk), vernetztes Polybutylacrylat sowie teilvernetzte Siliconkautschuke.

Solche Pfropfpolymerisate können z.B. hergestellt werden durch Emulsionspolymerisation von 70-30 Gew.-Teilen der genannten Monomeren in Gegenwart von 30-70 Gew.-Teilen des Kautschuks in Form seines Latex. Bevorzugt sind Latices mit mittleren Teilchendurchmessern ($d_{50}$) von 50 bis 1000 nm (vgl. z.B. DE-OS 2 420 358).

Bei der Pfropfpolymerisation wird neben dem eigentlichen Pfropfpolymerisat auch freies Copolymerisat der Pfropfmonomeren gebildet, d.h. Polymerisat, welches nicht am Kautschuk chemisch gebunden ist, jedoch eine ähnliche chemische Zusammensetzung wie die Pfropfhülle aufweist. Dieses freie Copolymerisat ist in der Menge der Komponente B der erfindungsgemäßen thermoplastischen Formmassen enthalten.

Die Komponente A der erfindungsgemäßen thermoplastischen Formmassen kann mit Komponente B auf üblichen Mischaggregaten, z.B. Schnecken, Knetern, Walzenstühlen, vermischt und anschließend durch Spritzguß, Extrusion oder Blasverfahren zu den endgültigen Formkörpern weiter verarbeitet werden. Dabei können übliche Zuschläge, wie Gleitmittel, Entformungsmittel, Farbmittel, Stabilisatoren, Antistatika, Flammschutzmittel, Füll- und Verstärkerstoffe, z.B. Glasfasern, zugefügt werden. Die Formgebung kann auf üblichen Verarbeitungsaggregaten vorgenommen werden und umfaßt z.B. Spritzgußverarbeitung, Plattenextrusion, Wärmeverformung, Kälteverformung und Kalanderverarbeitung.

Die in den folgenden Beispielen und Vergleichsbeispielen angegebenen Mengen sind Gewichtsteile.

I Prüfmethoden

| Schlagzähigkeit ($a_n$) | DIN 53 543 bei Raumtemperatur |
|---|---|
| Kerbschlagzähigkeit ($a_K$) | DIN 53 543 bei Raumtemperatur |
| Kugeldruckhärte ($H_c$) | DIN 53 546 |
| Wärmeformbeständigkeit Vicat B (120) | DIN 53 460 |
| Glastemperatur (Tg) | Thermomechanische Analyse (TMA), Gerät TMS-1, Perkin-Elmer, Penetration-mode, Meßsondendurchmesser 1 mm, Drucklast 0,2 N, Aufheizrate 5 k/min |

Messung der Latexscherstabilität

Zur Beurteilung der Latexscherstabilität von Komponente A wurde ein "Ultra-Turrax, Typ T 45" (Firma Jahnke & Kunkel GmbH & Co. KG / IKA-Werke Staufen, West Germany) verwendet.

Eine Latexprobe der Komponente A wurde bei Raumtemperatur (und gegebenenfalls bei 75°C) und pH-Wert 9 durch das rotierende Messer des Ultra-Turrax mit 10000 U/min geschert. Gemessen wurde die Zeit bis zur ersten Koagulatbildung, deutlich erkennbar am Anstieg der Leistungsaufnahme des Ultra-Turrax.

Eine ausreichende Scherstabilität ist gegeben, wenn der Latex mehr als 30 Sekunden ohne Koagulation stabil bleibt. Bei scherstabilen Latices wurde der Test nach mehr als 60 Sekunden abgebrochen.

II Herstellung der Komponente A

Beispiele A-1 - A-7 sowie A-I - A-IV

In einem 10-l-Glaskolben wurde eine Emulgatorlösung (s. Tab. 1) als Vorlage 1 vorgelegt und auf 75°C aufgeheizt. Als Vorlage 2 wurde eine Monomermischung aus $\alpha$-Methylstyrol, Acrylnitril und Comonomer (s. Tab. 1) zugegeben und 10 min emulgiert. Bie 75°C wurde eine Lösung von 0,35 Teilen Kaliumpersulfat in 20 Teilen Wasser zugegeben und 1 Stunde gerührt. Anschließend wurden die Monomerzuläufe 1 und 2 in einem Zeitraum von 5 Stunden gleichmäßig zudosiert. Nach beendeter Zugabe wurde 2 Stunden nachgerührt, anschließend der Polymerlatex analysiert und aufgearbeitet.

Hierzu wurde der Polymerisatlatex durch Zugabe einer 2 %igen wäßrigen Magnesiumsulfatlösung bei 90°C koaguliert. Das Koagulat wurde gewaschen und auf einen Restanteil an flüchtigen Bestandteilen von kleiner 2000 ppm getrocknet.

Aus Tab. 1 wird deutlich, daß die erfindungsgemäßen Polymerisate hohe Glastemperaturen aufweisen und ihre Herstellung durch Emulsionspolymerisation zu deutlich scherstabilen Polymerlatices führt (vgl. A-1 bis A-4).

Dies gilt insbesondere bei der Polymerisation in Gegenwart geringer Emulgatormengen (A-3, A-6) oder bei hohen Polymerfeststoffgehalten (A-7).

## Tabelle 1

| Beispiel | | A-1 | A-2 | A-3 | A-4 |
|---|---|---|---|---|---|
| **Vorlage 1** | | | | | |
| entionisiertes Wasser | (Teile) | 130 | 165 | 145 | 130 |
| Emulgator I* | (Teile) | 2,5 | 2,5 | 1,0 | 2,5 |
| Emulgator II* | (Teile) | - | - | - | - |
| **Vorlage 2** | | | | | |
| AMS | (Teile) | 30 | 12 | 25 | 20 |
| ACN | (Teile) | 4 | 5 | 5 | 4 |
| Acrylamid | (Teile) | 1 | 1 | 1 | 1 |
| Methylmethacrylat | (Teile) | - | - | - | - |
| t-DDM* | (Teile) | - | 0,05 | - | - |
| **Monomerzulauf 1** | | | | | |
| AMS | (Teile) | 50 | 60 | 50 | 50 |
| ACN | (Teile) | 13 | 22 | 18 | 16 |
| t-DDM* | (Teile) | - | 0,1 | 0,1 | 0,1 |
| **Monomerzulauf 2** | | | | | |
| Acrylamid | (Teile) | 2 | 1 | 1 | 4 |
| entionisiertes Wasser | (Teile) | 20 | 20 | 20 | 30 |

\*    t-DDM tert.-Dodecylmercaptan, Emulgator I Alkalisalz eine $C_{12}$-$C_{16}$-Alkylsufonatgemisches
Emulgator II   Na-Salz der disproportionierten Abietinsäure

EP 0 330 038 B1

**T a b e l l e   1** (Fortsetzung)

| Beispiel | A-1 | A-2 | A-3 | A-4 |
|---|---|---|---|---|
| Polymerfeststoffgehalt % | 33 | 33 | 34 | 34 |
| Latex-pH-Wert | 8,3 | 8,5 | 8,1 | 8,0 |
| Latexrührstabilität | | | | |
| $20^0$ C (sec) | 60 | 60 | 60 | 60 |
| $75^0$ C | | | | 30 |
| (TMA, $^0$C) Glastemperatur | 144 | 126 | 137 | 139 |

EP 0 330 038 B1

**T a b e l l e  1**  (Fortsetzung)

| Beispiel | A-5 | A-6 | A-7 | A-I [x] | A-II [x] | A-III [x] | A-IV [x] |
|---|---|---|---|---|---|---|---|
| **Vorlage 1** | | | | | | | |
| entionisiertes Wasser | 130 | 130 | 90 | 165 | 165 | 165 | 165 |
| Emulgator I* | - | - | - | 2,5 | - | - | 2,5 |
| Emulgator II* | 2,5 | 1,0 | 2,5 | - | 1,0 | 2,5 | - |
| **Vorlage 2** | | | | | | | |
| AMS | 20 | 20 | 20 | 12 | 12 | 20 | 25 |
| ACN | 5 | 5 | 5 | 6 | 6 | 6 | 4 |
| Acrylamid | 1 | 1 | 1 | - | - | - | - |
| Methylmethacrylat | - | - | - | - | - | - | 3 |
| t-DDM* | 0,05 | 0,05 | 0,05 | 0,05 | 0,05 | 0,05 | 0,05 |
| **Monomerzulauf 1** | | | | | | | |
| AMS | 55 | 55 | 55 | 60 | 60 | 55 | 50 |
| ACN | 18 | 18 | 18 | 22 | 22 | 19 | 18 |
| t-DDM* | 0,05 | 0,05 | 0,05 | 0,1 | 0,1 | 0,05 | 0,05 |

\* t-DDM tert.-Dodecylmercaptan
  Emulgator I  Alkalisalz eines $C_{12}$-$C_{16}$-Alkylsulfonatgemisches
  Emulgator II Na-Salz der disproportionierten Abietinsäure

  x Vergleich

EP 0 330 038 B1

T a b e l l e  1  (Fortsetzung)

| Beispiel | A-5 | A-6 | A-7 | A-I× | A-II× | A-III× | A-IV× |
|---|---|---|---|---|---|---|---|
| **Monomerzulauf 2** | | | | | | | |
| Acrylamid | 1 | 1 | 1 | - | - | - | - |
| entionisiertes Wasser | 20 | 20 | 20 | - | - | - | - |
| Polymerfeststoffgehalt | 35 | 34 | 41 | 33 | 32 | 32 | 32 |
| Latex-pH-Wert | 9,2 | 9,0 | 8,7 | 7,6 | 8,5 | 8,0 | 8,3 |
| Latexrührstabilität 20°C | 60 | 60 | 55 | 30 | 5 | 32 | 27 |
| 75°C | 41 | 32 | | 2 | | | |
| Glastemperatur (TMA, °C) | 140 | 141 | 140 | 124 | 121 | 136 | 130 |

× Vergleich

Herstellung der Komponente B

50 Gew.-Teile (bezogen auf Feststoff) Polybutadienlatex (mittlerer Teilchendurchmesser 300 nm) wurden in einem 10-l-Glaskolben vorgelegt und bei 65°C mit 0,5 Gew.-Teilen K-Persulfat versetzt. Anschließend wurden während 5 Stunden 50 Gew.-Teile einer Mischung aus 72 Gew.-Teilen Styrol und 28 Gew.-Teilen Acrylnitril gleichmäßig zudosiert. Schließlich ließ man 3 Stunden bei 65°C nachrühren. Der Polymerisatlatex wurde, wie für Komponente A beschrieben, koaguliert und getrocknet.

Die Komponenten A und B wurden nach Zusatz von Verarbeitungshilfsstoffen auf einem Innenkneter compoundiert und bei 240°C zu Prüfkörpern verarbeitet.

Aus Tab. 2 ist ersichtlich, daß die erfindungsgemäße Komponente A in Mischung mit ABS-Pfropfkautschuk ausgezeichnete Eigenschaftskombinationen aufweisen.

## T a b e l l e  2

| Beispiel | | C-1 | C-3 | C-4 | C-I[x] | C-II[x] |
|---|---|---|---|---|---|---|
| Komponente A-1 | | 77 | | | | |
| A-2 | | | 77 | | | |
| A-5 | Teile | | | 77 | | |
| A-I[x] | | | | | 77 | |
| A-III[x] | | | | | | 77 |
| Komponente B | | 23 | 23 | 23 | 23 | 23 |
| 1) Schlagzähigkeit $(a_n)$ [KJ/m$^2$] | | 84 | 106 | 100 | 100 | 87 |
| 2) Kerbschlagzähigkeit $(a_k)$ [KJ/m$^2$] | | 9 | 12 | 11 | 10 | 9 |
| 3) Kugeldruckhärte $(H_c)$ | | 117 | 115 | 120 | 115 | 118 |
| 4) Wärmeformbeständigkeit Vicat B (120) | | 125 | 116 | 124 | 114 | 123 |

x  Vergleich

## Patentansprüche

1. Thermoplastische Formmassen mit erhöhter Wärmeformbeständigkeit, enthaltend
   A. 10-100 Gew.-% eines Polymerisats, aus
      A.1 50- 85 Gew.-Teilen $\alpha$-Methylstyrol
      A.2 10- 50 Gew.-Teilen Acrylnitril
      A.3 1- 50 Gew.-Teilen Acrylamid
   B. 0-90 Gew.-% eines Pfropfpolymerisats von Styrol und/oder $\alpha$-Methylstyrol und Acrylnitril sowie gegebenenfalls weiteren copolymerisierbaren Monomeren oder von Methylmethacrylat und gegebenenfalls weiteren copolymerisierbaren Monomeren auf einen Kautschuk mit einer Glastemperatur kleiner 0°C.

2. Thermoplastische Formmassen, enthaltend
   A. 10-100 Gew.-% eines Polymerisats, aus
      A.1 62- 85 Gew.-Teilen $\alpha$-Methylstyrol
      A.2 14- 37 Gew.-Teilen Acrylnitril
      A.3 1- 20 Gew.-Teilen Acrylamid

EP 0 330 038 B1

B. 0-90 Gew.-% eines Pfropfpolymerisats von Styrol und/oder α-Methylstyrol und Acrylnitril sowie gegebenenfalls weiteren copolymerisierbaren Monomeren oder von Methylmethacrylat und gegebenenfalls weiteren copolymerisierbaren Monomeren auf einen Kautschuk mit einer Glastemperatur kleiner 0°C.

**3.** Thermoplastische Formmassen, enthaltend
    A. 10-100 Gew.-% eines Polymerisats, aus
        A.1 69- 85 Gew.-Teilen α-Methylstyrol
        A.2 14- 30 Gew.-Teilen Acrylnitril
        A.3 1- 10 Gew.-Teilen Acrylamid
    B. 0-90 Gew.-% eines Pfropfpolymerisats von Styrol und/oder α-Methylstyrol und Acrylnitril sowie gegebenenfalls weiteren copolymerisierbaren Monomeren oder von Methylmethacrylat und gegebenenfalls weiteren copolymerisierbaren Monomeren auf einen Kautschuk mit einer Glastemperatur kleiner 0°C.

**4.** Thermoplastische Formmassen, enthaltend
    A. 60-90 Gew.-% mindestens eines Polymerisats A gemäß einem der Ansprüche 1 - 3
    B. 10-40 Gew.-% mindestens eines Pfropfpolymerisats B gemäß Anspruch 1.

**5.** Verfahren zur Herstellung der thermoplastischen Formmassen gemäß einem der Ansprüche 1 - 3, dadurch gekennzeichnet, daß man
50-85 Gew.-Teile α-Methylstyrol
10-50 Gew.-Teile Acrylnitril
1-50 Gew.-Teilen Acrylamid
durch an sich bekannte Emulsionspolymerisation polymerisiert, das Polymerisat aus dem erhaltenen Latex isoliert und gegebenenfalls mit einem Pfropfpolymerisat gemäß B in Anspruch 1 mischt.

**Claims**

**1.** Thermoplastic moulding compounds with elevated heat distortion temperature, containing
    A. from 10-100% by weight of a polymer of
        A.1 from 50- 85 parts by weight of α-methylstyrene,
        A.2 from 10- 50 parts by weight of acrylonitrile and
        A.3 from 1- 50 parts by weight of acrylamide and
    B. from 0- 90% by weight of a graft polymer of styrene and/or α-methylstyrene and acrylonitrile and optionally other copolymerisable monomers or of methyl methacrylate and optionally other copolymerisable monomers on a rubber having a glass temperature below 0°C.

**2.** Thermoplastic moulding compounds containing
    A. from 10-100% by weight of a polymer of
        A.1 from 62- 85 parts by weight of α-methylstyrene,
        A.2 from 14- 37 parts by weight of acrylonitrile and
        A.3 from 1- 20 parts by weight of acrylamide and
    B. from 0- 90% by weight of a graft polymer of styrene and/or α-methylstyrene and acrylonitrile and optionally other copolymerisable monomers or of methyl methacrylate and optionally other copolymerisable monomers on a rubber having a glass temperature below 0°C.

**3.** Thermoplastic moulding compounds containing
    A. from 10-100% by weight of a polymer of
        A.1 from 69- 85 parts by weight of α-methylstyrene,
        A.2 from 14- 30 parts by weight of acrylonitrile and
        A.3 from 1- 10 parts by weight of acrylamide and
    B. from 0- 90% by weight of a graft polymer of styrene and/or α-methylstyrene and acrylonitrile and optionally other copolymerisable monomers or of methyl methacrylate and optionally other copolymerisable monomers on a rubber having a glass temperature below 0°C.

**4.** Thermoplastic moulding compounds containing
    A. from 60-90% by weight of at least one polymer A according to one of the Claims 1 - 3 and

B. from 10-40% by weight of at least one graft polymer B according to Claim 1.

5. A process for the preparation of thermoplastic moulding compounds according to one of the Claims 1 - 3, characterised in that
from 50-85 parts by weight of α-methylstyrene,
from 10-50 parts by weight of acrylonitrile and
from 1-50 parts by weight of acrylamide
are polymerised by the known process of emulsion polymerisation and the polymer is isolated from the resulting latex and optionally mixed with a graft polymer according to B of Claim 1.

**Revendications**

1. Compositions à mouler thermoplastiques douées d'une stabilité dimensionnelle élevée à chaud, contenant
   A. 10 à 100 % en poids d'un produit de polymérisation formé
      A.1 de 50 à 85 parties en poids d'α-méthylstyrène
      A.2 de 10 à 50 parties en poids d'acrylonitrile
      A.3 de 1 à 50 parties en poids d'acrylamide
   B. 0 à 90 % en poids d'un polymère greffé de styrène et/ou d'α-méthylstyrène et d'acrylonitrile ainsi que, le cas échéant, d'autres monomères copolymérisables ou de méthacrylate de méthyle et le cas échéant d'autres monomères copolymérisables, sur un caoutchouc ayant une température de transition vitreuse inférieure à 0°C.

2. Compositions à mouler thermoplastiques contenant
   A. 10 à 100 % en poids d'un produit de polymérisation formé
      A.1 de 62 à 85 parties en poids d'α-méthylstyrène
      A.2 de 14 à 37 parties en poids d'acrylonitrile
      A.3 de 1 à 20 parties en poids d'acrylamide
   B. 0 à 90 % en poids d'un polymère greffé de styrène et/ou d'α-méthylstyrène et d'acrylonitrile ainsi que, le cas échéant, d'autres monomères copolymérisables ou de méthacrylate de méthyle et le cas échéant d'autres monomères copolymérisables, sur un caoutchouc ayant une température de transition vitreuse inférieure à 0°C.

3. Compositions à mouler thermoplastiques, contenant
   A. 10 à 100 % en poids d'un produit de polymérisation formé
      A.1 de 69 à 85 parties en poids d'α-méthylstyrène
      A.2 de 14 à 30 parties en poids d'acrylonitrile
      A.3 de 1 à 10 parties en poids d'acrylamide
   B. 0 à 90 % en poids d'un polymère greffé de styrène et/ou d'α-méthylstyrène et d'acrylonitrile ainsi que, le cas échéant, d'autres monomères copolymérisables ou de méthacrylate de méthyle et le cas échéant d'autres monomères copolymérisables, sur un caoutchouc ayant une température de transition vitreuse inférieure à 0°C.

4. Compositions à mouler thermoplastiques, contenant
   A. 60 à 90 % en poids d'au moins un polymère A suivant l'une des revendications 1 à 3.
   B. 10 à 40 % en poids d'au moins un polymère greffé B suivant la revendication 1.

5. Procédé de production de compositions à mouler thermoplastiques suivant l'une des revendications 1 à 3, caractérisé en ce qu'on polymérise
   50 à 85 parties en poids d'α-méthylstyrène
   10 à 50 parties en poids d'acrylonitrile
   1 à 50 parties en poids d'acrylamide
   dans une opération connue de polymérisation en émulsion, on isole le polymère du latex obtenu et on le mélange le cas échéant avec un polymère greffé correspondant à B dans la revendication 1.